# EUROPEAN PATENT SPECIFICATION

(11) **EP 3 133 436 B1**
(45) Date of publication and mention of the grant of the patent: **11.03.2020**
(21) Application number: 15779711.9
(22) Date of filing: 09.04.2015
(51) Int. Cl.: G02B 27/01, H04N 9/31, H04N 5/74, H04N 5/64

(54) **HEADS-UP DISPLAY AND MOVING BODY EQUIPPED WITH HEADS-UP DISPLAY**
SCHEINWERFERANZEIGE UND BEWEGLICHER KÖRPER MIT DER SCHEINWERFERANZEIGE
DISPOSITIF D'AFFICHAGE TÊTE-HAUTE ET CORPS MOBILE ÉQUIPÉ DU DISPOSITIF D'AFFICHAGE TÊTE-HAUTE

(30) Priority: 14.04.2014 JP 2014082469; 26.02.2015 JP 2015036821
(43) Date of publication of application: 22.02.2017
(73) Proprietor: Panasonic Intellectual Property Management Co., Ltd., Osaka-shi, Osaka 570-6207 (JP)
(72) Inventor: KUZUHARA, Satoshi, Chuo-ku, Osaka-shi Osaka 540-6207 (JP); OKAYAMA, Hiroaki, Chuo-ku, Osaka-shi Osaka 540-6207 (JP)
(74) Representative: Grünecker Patent- und Rechtsanwälte PartG mbB
(86) International application number: PCT/JP2015/002003
(87) International publication number: WO 2015/159522

(56) References cited:
- WO-A1-2013/051086
- JP-A- H06 144 082
- JP-A- 2008 296 635
- JP-A- 2010 164 941
- JP-A- 2012 062 051
- JP-A- 2015 054 628
- US-A1- 2002 018 182
- US-A1- 2009 067 057

## Description

### TECHNICAL FIELD

The present disclosure relates to a head-up display that allows an observer to visually recognize a display image projected on a reflection unit as a virtual image, and a vehicle equipped with the head-up display.

### BACKGROUND ART

PTL 1 discloses a display device that applies a sense of perspective to a display image to create a visually presentation effect. This display device includes a projector, a first screen displaying a first image, a second screen displaying a second image, a prism sheet, and a reflection unit. With this configuration, the display device can allow a driver to visually recognize two display images with a sense of perspective. PTL 2 and PTL 3 also relate to specific head-up display configurations that allow an observer to visually recognize first and second virtual images.

### Citation List

### Patent Literature

PTL 1: Unexamined Japanese Patent Publication No. 2013-83675
PTL 2: US Patent Application No. 2002-18182
PTL 3: Japanese Patent Application No. 2012-62051

### SUMMARY OF THE INVENTION

The invention is defined in the independent claims. Further advantageous embodiments are defined in dependent claims.

A head-up display according to the present disclosure is mounted to a vehicle having a windshield and allows an observer to visually recognize a virtual image. The head-up display includes a first display element configured to display an image, a combiner having translucency and configured to reflect the image displayed by the first display element and project the image onto an observer, a first optical system configured to reflect the image displayed by the first display element and project the image onto the combiner, a second display element configured to display an image, a second optical system configured to reflect the image displayed by the second display element and project the image onto the windshield, and a housing having an opening and configured to store the first display element, the second display element, and the second optical system, wherein the second optical system includes a first mirror and a second mirror in order on an optical path from the second display element to the windshield, the first optical system is disposed at a back of the vehicle relative to the opening, and the second mirror is disposed at a front of the vehicle relative to the opening.

### BRIEF DESCRIPTION OF DRAWINGS

FIG. 1 is a schematic diagram illustrating a configuration of a vehicle equipped with a head-up display according to the present disclosure.
FIG. 2 is a schematic diagram illustrating a configuration of the head-up display according to the present disclosure.
FIG. 3 is a diagram illustrating a windshield viewed from an observer, when the head-up display according to the present disclosure is activated.
FIG. 4 is a schematic diagram illustrating a configuration of a head-up display according to a first example. (not part of the invention)
FIG. 5 is a schematic diagram illustrating a configuration of a head-up display according to a second example. (not part of the invention)
FIG. 6 is a schematic diagram illustrating a configuration of a head-up display according to a third example. (not part of the invention)
FIG. 7 is a schematic diagram illustrating a configuration of a head-up display according to a fourth exemplary embodiment of the invention.
FIG. 8 is a schematic diagram illustrating a configuration of a head-up display according to a fifth exemplary embodiment of the invention.
FIG. 9 is a schematic diagram illustrating a configuration of a head-up display according to a sixth exemplary embodiment of the invention.
FIG. 10 is a schematic diagram illustrating a configuration of a head-up display according to a seventh example. (not part of invention)

### DESCRIPTION OF EMBODIMENTS

Hereinafter, exemplary embodiments will be described in detail with reference to the accompanying drawings as necessary. It is noted, however, that descriptions in more detail than necessary will sometimes be omitted. For example, detailed descriptions of well-known items and duplicate descriptions of substantially the same configuration will sometimes be omitted.
This is to avoid unnecessary redundancy in the following description and to facilitate understanding by those skilled in the art.

Note that the accompanying drawings and the following descriptions are provided so as to facilitate fully understanding of the present disclosure by those skilled in the art, and these are not intended to limit the subject matter defined by the claims.

### FIRST EXAMPLE not part of the invention but facilitates understanding of the invention

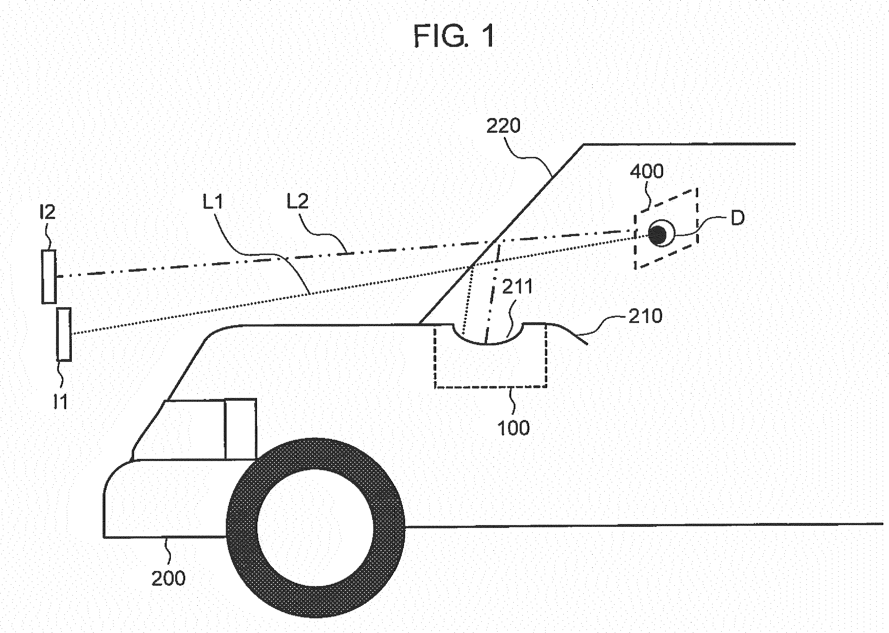

A first example will be described below with reference to FIGS. 1 to 4.

### [1-1. Configuration]

### [1-1-1. Entire configuration]

FIG. 1 is a diagram illustrating a configuration of car 200 (one example of a vehicle) equipped with head-up display 100 according to the present disclosure. Head-up display 100 is disposed inside dashboard 210 of car 200 as illustrated in FIG. 1. Observer D visually recognizes virtual images I1 and I2 which are generated by a display element and an optical system mounted in head-up display 100 and reflected through windshield 220. Head-up display 100 projects an image onto windshield 220 of car 200 to form virtual images I1 and 12 at the opposite side of observer D relative to windshield 220. Observer D visually recognizes virtual images I1 and 12. A dotted line and a chain line in FIG. 1 indicate center optical paths L1 and L2 of projected images, and in the description below, center optical paths L1 and L2 are indicated by a dotted line or a chain line.

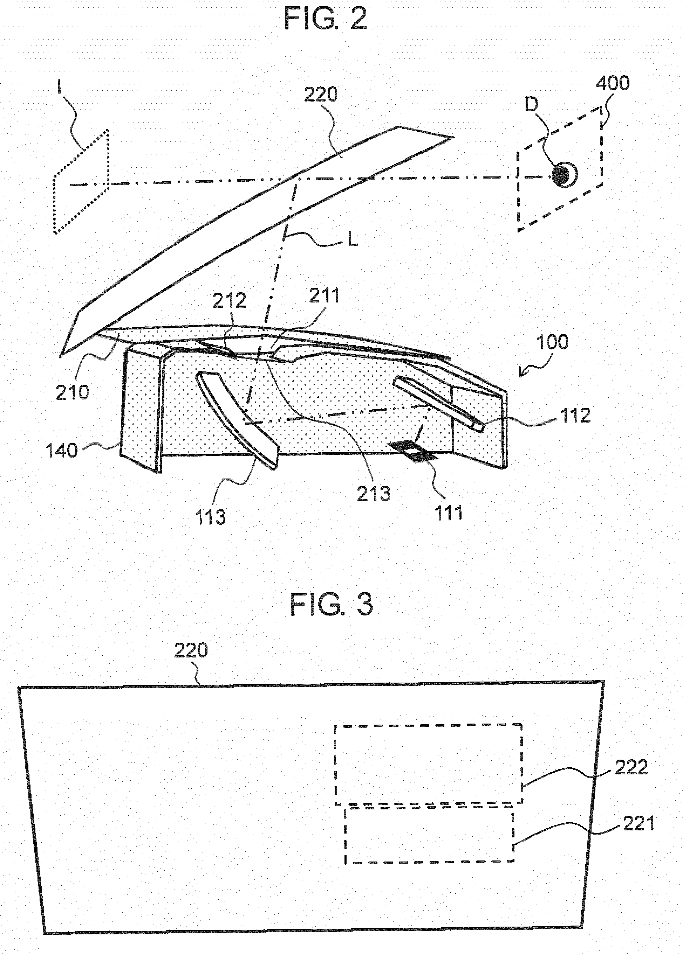

FIG. 2 is a schematic diagram illustrating a configuration of head-up display 100 according to the present disclosure. FIG. 2 is a partially cutout diagram of head-up display 100.

As illustrated in FIG. 2, head-up display 100 according to the present disclosure includes, in housing 140 having opening 211, first display element 111 displaying an image and a projection optical system projecting an image displayed by first display element 111 onto windshield 220. With this configuration, observer D can visually recognize a virtual image I of the display image through windshield 220. Virtual images I1 and I2 of the image projected on windshield 220 can visually be recognized with no missing part at eye box 400 that is a predetermined visual recognition region.

Opening 211 of housing 140 forms an emission opening from which projection light of the projection optical system is emitted. Translucent antireflection cover 213 such as a transparent resin plate may be mounted to opening 211 of housing 140 so as to cover opening 211.

A liquid crystal display device, an organic EL display device, or a plasma display is used for first display element 111, for example. A predetermined image is displayed in a display region of first display element 111 according to an image signal input from display control unit not illustrated.

The projection optical system includes first mirror 112 serving as a first reflection member disposed at the side of first display element 111, and second mirror 113 serving as a second reflection member disposed at the side of opening 211 on an optical path from first display element 111 to windshield 220.

FIG. 3 is a diagram illustrating a positional relation between first region 221 where virtual image I1 is displayed and second region 222 where virtual image I2 is displayed, as viewed from observer D.

Virtual image I1 is located below virtual image I2 as viewed from observer D. A speed meter or the like which is always displayed is displayed in first region 221 where virtual image I1 is displayed, and a display content for drawing attention of observer D, such as a warning, or a display content according to a traveling condition is displayed in second region 222 where virtual image I2 is displayed.

### [1-1-2. Arrangement configuration of display device]

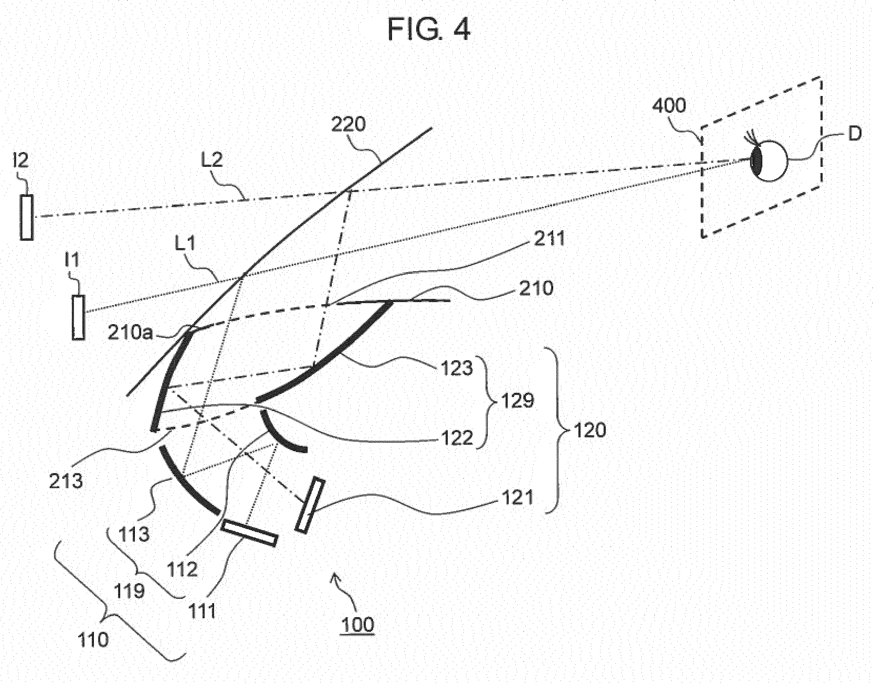

FIG. 4 schematically illustrates the configuration of head-up display 100 according to the first example. Head-up display 100 includes inside first display device 110 and second display device 120 provided above first display device 110.

First display device 110 includes first display element 111 and first optical system 119. First optical system 119 includes first mirror 112 and second mirror 113. A reflection surface of first mirror 112 in first optical system 119 is convex, and a reflection surface of second mirror 113 is concave.

Second display device 120 includes second display element 121 and second optical system 129. Second display element 121 is provided vertically below first mirror 112 in first display device. Second optical system 129 includes first mirror 122 and second mirror 123. Reflection surfaces of first mirror 122 and second mirror 123 in second optical system 129 are concave.

Second mirror 123 in second optical system 129 reflects a light flux of a display image reflected by first mirror 122 located at the front of car 200 toward windshield 220. A tangent normal vector near the center of the displayed image on the reflection surface of second mirror 123 includes a component in the forward direction of car 200. With this configuration, when external light is incident through windshield 220, external light reflected on second mirror 123 is not directly guided toward observer D. Even when external light incident through windshield 220 is reflected on second mirror 123, and then, reflected at least once on a reflection member such as windshield 220, this light is prevented from being guided toward observer D.

First mirror 112 and second mirror 113 in first display device 110, and first mirror 122 and second mirror 123 in second display device 120 may be semi-transparent mirrors that reflect a part of incident light flux, or mirrors that reflect entire light flux.

First mirror 122 in second display device 120 may be formed from a part of front panel (decorative member) 210a composing the front part of dashboard 210. Second mirror 123 in second display device 120 is provided inside dashboard 210. Second mirror 123 may be formed from a part of antireflection cover 213 mounted to cover first optical system 119, or may be continuously formed with antireflection cover 213.

A screen generating an image using a liquid crystal display device, an organic light-emitting diode (electroluminescence), a plasma display, or a projector can be used for first display element 111 and second display element 121.

### [1-2. Operation]

As illustrated in FIG. 4, first display device 110 displays virtual image I1 in the first example. First display device 110 reflects an image displayed by first display element 111 through first mirror 112, reflects this image through second mirror 113, and then reflects this image through windshield 220, thereby guiding this image to point-of-view region 400 of observer D so as to allow observer D to visually recognize this image as virtual image I1. Second display device 120 displays virtual image I2. Second display device 120 reflects an image displayed by second display element 121 through first mirror 122, reflects this image through second mirror 123, and then reflects this image through windshield 220, thereby guiding this image to point-of-view region 400 of observer D so as to allow observer D to visually recognize this image as virtual image I2. Center optical path L1 of the image of first display device 110 is reflected on windshield 220 at the position lower than center optical path L2 of the image of second display device 120.

The positional relation between first display device 110 and second display device 120 will be described below. As illustrated in FIG. 4, a light flux of the image emitted from second display element 121 indicated with center optical path L2 passes between first display element 111 and first mirror 112 of first display device 110. Then, this light flux passes between first mirror 112 of first display device 110 and second mirror 113 of first display device 110, and then passes between second mirror 113 of first display device 110 and windshield 220 to be incident on first mirror 122 of second display device 120. The light flux reflected on first mirror 122 of second display device 120 passes between second mirror 113 of first display device 110 and windshield 220, and is incident on second mirror 123 of second display device 120. The light flux reflected on second mirror 123 of second display device 120 is incident on windshield 220, reflected thereon, and then, guided to point-of-view region 400 of observer D to be visually recognized as virtual image I2.

As described above, in the first example, the light flux of the image emitted from second display element 121 crosses the light flux emitted from first display element 111 five times before being incident on windshield 220, and then, guided toward observer D to be visually recognized as virtual image I2. The light flux of the image emitted from first display element 111 crosses the light flux emitted from second display element 121 four times before being incident on windshield 220. After being reflected on windshield 220, this light flux crosses the light flux once, and then, guided toward observer D to be visually recognized as virtual image I1. Specifically, the light flux emitted from first display element 111 and the light flux emitted from second display element 121 cross each other four times in the inside of dashboard 210 and once in the outside of dashboard 210, until they are guided toward observer D to be visually recognized as virtual images I1 and I2.

### [1-3. Effect]

The display device is separated into first display device 110 and second display device 120, whereby the size of entire head-up display 100 in the depth direction (in the vertical direction in FIG. 4) and the size in the front-back direction (in the horizontal direction in FIG. 4) of car 200 can be decreased. With this, head-up display 100 can be downsized, and a display of a virtual image on a large screen is enabled with two virtual images I1 and I2. In general, vehicle structures such as a reinforcement or air conditioner duct are provided in a dashboard of car 200 equipped with head-up display 100. Head-up display 100 according to the first example can decrease the size in its depth direction and the size in the front-back direction of car 200, thereby being capable of preventing interference with the vehicle structures.

In addition, head-up display 100 enables setting of a display distance or display size for each of virtual images displayed by first display device 110 and second display device 120.

Head-up display 100 according to the first example uses a part of front panel 212 and a part of antireflection cover 213 respectively as first mirror 122 and second mirror 123 in second display device 120. In this case, vehicle-specific structures are used as second optical system 129 of second display device 120, whereby second display device 120 can further be downsized. Accordingly, further downsizing of entire head-up display 100 can be implemented

### SECOND EXAMPLE not part of the invention but facilitates understanding of the invention.

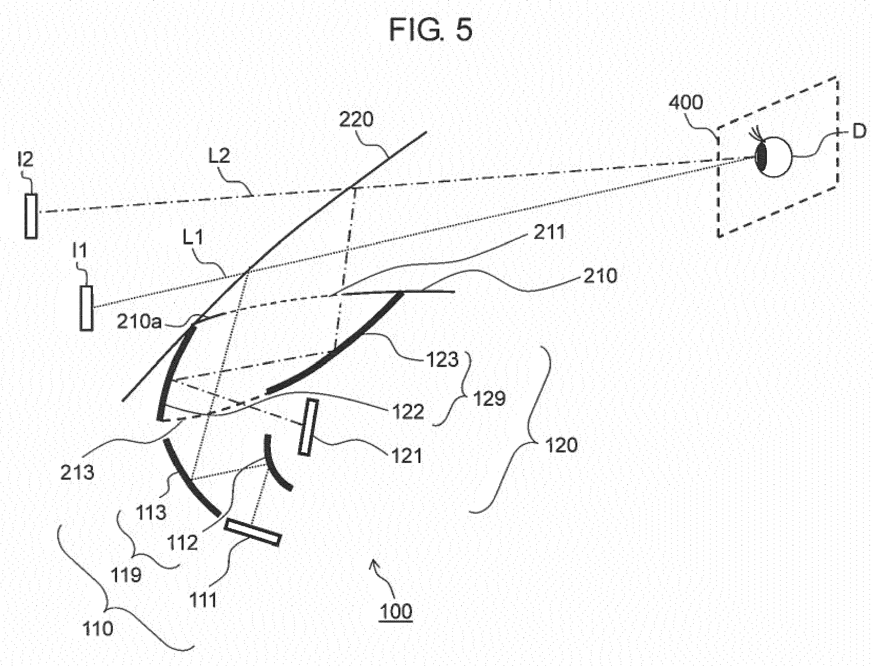

Head-up display 100 according to a second example will be described below with reference to FIG. 5. The second example is different from the first example in that second display element 121 in second display device 120 is located vertically above first display device 110.

### [2-1. Configuration]

FIG. 5 is a schematic diagram illustrating the configuration of head-up display 100 according to the second example. Head-up display 100 includes first display device 110 and second display device 120 provided above first display device 110 in the vertical direction.

First display device 110 includes first display element 111 and first optical system 119. First optical system 119 includes first mirror 112 and second mirror 113. Desirably, a reflection surface of first mirror 112 in first optical system 119 is convex, and a reflection surface of second mirror 113 is concave.

Second display device 120 includes second display element 121 and second optical system 129. Second optical system 129 includes first mirror 122 and second mirror 123. Second display element 121 is provided vertically below second mirror 123 and vertically above first mirror 112 in first display device 110. Desirably, a reflection surface of first mirror 122 in second optical system 129 is concave, and a reflection surface of second mirror 123 is concave. Second mirror 123 in second optical system 129 reflects a light flux incident from first mirror 122 located at the front of car 200 toward windshield 220. The reflection surface of second mirror 123 is concave, and the tangent normal at the position where the center (L2) of the image from second display element 121 is reflected has a vector component in the forward direction of car 200. With this configuration, even when external light incident through windshield 220 is reflected on second mirror 123, this external light is not directly guided toward observer D. Even when external light incident through windshield 220 is reflected on second mirror 123, and then, reflected on a reflection member such as windshield 220, this light is prevented from being guided toward observer D.

First mirror 112 and second mirror 113 in first display device 110, and first mirror 122 and second mirror 123 in second display device 120 may be semi-transparent mirrors that reflect a part of incident light flux, or mirrors that reflect entire light flux.

First mirror 122 in second display device 120 may be formed from a part of front panel (decorative member) 210a composing the front part of dashboard 210. Second mirror 123 in second display device 120 is provided inside dashboard 210. Second mirror 123 may be formed from a part of antireflection cover 213 mounted to cover first optical system 119, or may be continuously formed with antireflection cover 213.

A screen generating an image using a liquid crystal display device, an organic light-emitting diode (electroluminescence), a plasma display, or a projector can be used for first display element 111 and second display element 121

### 2-2. Operation]

As illustrated in FIG. 5, first display device 110 displays virtual image I1 in the second example. First display device 110 reflects an image displayed by first display element 111 through first mirror 112, reflects this image through second mirror 113, and then reflects this image through windshield 220, thereby guiding this image to point-of-view region 400 of observer D so as to allow observer D to visually recognize this image as virtual image I1. Second display device 120 displays virtual image I2. Second display device 120 reflects an image displayed by second display element 121 through first mirror 122, reflects this image through second mirror 123, and then reflects this image through windshield 220, thereby guiding this image to point-of-view region 400 of observer D so as to allow observer D to visually recognize this image as virtual image I2. Center optical path L1 of the image of first display device 110 is reflected on windshield 220 at the position lower than center optical path L2 of the image of second display device 120.

Different from the first example, the light flux emitted from second display element 121 passes neither between first display element 111 and first mirror 112 of first display device 110 nor between first mirror 112 and second mirror 113 in the second example. The light flux emitted from second display element 121 of second display device 120 passes between second mirror 113 of first display device 110 and windshield 220, and is incident on first mirror 122 of second display device 120. The light flux incident on first mirror 122 of second display device 120 is reflected, passes between second mirror 113 of first display device 110 and windshield 220, and is incident on second mirror 123 of second display device 120. The light flux incident on second mirror 123 of second display device 120 is reflected thereon, reflected on windshield 220, and then, guided to power-of-view region 400 of observer D to be visually recognized as a virtual image I2 by observer D

### [2-3. Effect]

The display device is separated into first display device 110 and second display device 120, whereby the size of entire head-up display 100 in the depth direction (in the vertical direction in FIG. 5) and the size in the front-back direction (in the horizontal direction in FIG. 5) of car 200 can be decreased. With this, head-up display 100 can be downsized, and a display of a virtual image on a large screen is enabled with two virtual images I1 and I2. In addition, head-up display 100 enables setting of a display position or display size for each of virtual images displayed by first display device 110 and second display device 120.

In addition, as in the first example, head-up display 100 according to the second example uses a part of front panel 212 and a part of antireflection cover 213 respectively as first mirror 122 and second mirror 123 in second display device 120. Thus, further downsizing of entire head-up display 100 can be implemented.

In the present example, second display element 121 in second display device 120 is provided vertically below second mirror 123 and vertically above first mirror 112 in first display device 110. With this, each of first display device 110 and second display device 120 can be formed as a module, whereby assembling property can be enhanced.

### THIRD EXAMPLE not part of the invention but facilitates understanding of the invention

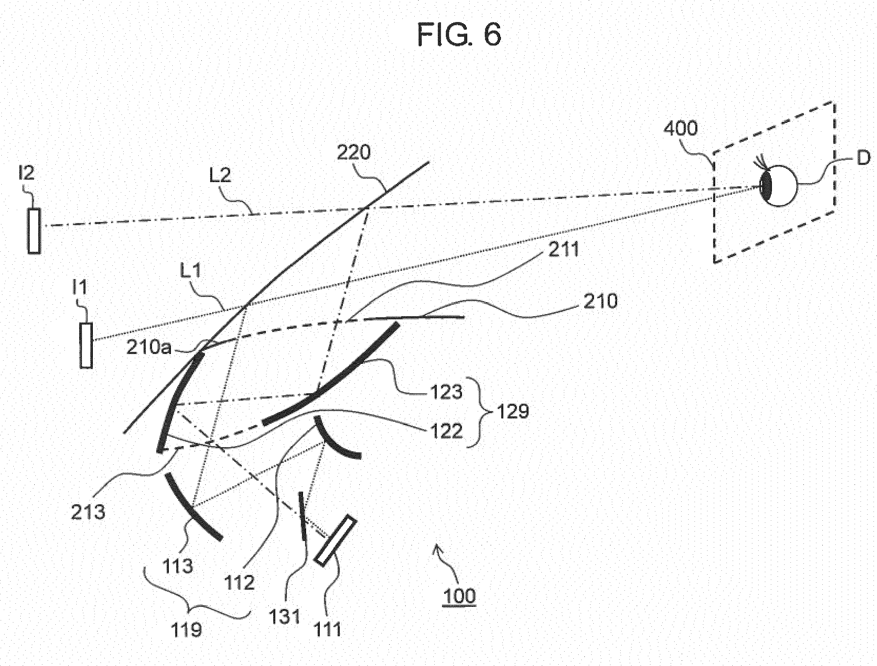

Head-up display 100 according to a third example will be described below with reference to FIG. 6.

[3-1. Configuration] FIG. 6 is a schematic diagram illustrating the configuration of head-up display 100 according to the third example. Head-up display 100 includes inside first optical system 119, second optical system 129, first display element 111, and optical device 131 that splits a light flux.

First optical system 119 includes first mirror 112 and second mirror 113. Desirably, a reflection surface of first mirror 112 in first optical system 119 is convex, and a reflection surface of second mirror 113 is concave.

Second optical system 129 includes first mirror 122 and second mirror 123. The reflection surface of second mirror 123 in second optical system 129 is desirably concave. Second optical system 129 is provided above first optical system 119 in the vertical direction.

Optical device 131 has a function of splitting a light flux emitted from first display element 111 for each time. Alternatively, optical device 131 may have a function of splitting a light flux emitted from first display element 111 for each wavelength band. Alternatively, optical device 131 may have a function of splitting a light flux emitted from first display element 111 according to polarizing direction

Second mirror 123 in second optical system 129 reflects a light flux incident from first mirror 122 located at the front of car 200 toward windshield 220. The reflection surface of second mirror 123 is concave, and the tangent normal at the position where the center (L2) of the image from first display element 111 is reflected has a vector component in the forward direction of car 200. With this configuration, even when external light incident through windshield 220 is reflected on second mirror 123, this external light is not directly guided toward observer D. Even when external light incident through windshield 220 is reflected on second mirror 123, and then, reflected on a reflection member such as windshield 220, this light is prevented from being guided toward observer D.

First mirror 112 and second mirror 113 in first optical system 119, and first mirror 122 and second mirror 123 in second optical system 129 may be semi-transparent mirrors that reflect a part of incident light flux, or mirrors that reflect entire light flux.

First mirror 122 in second optical system 129 may be formed from a part of front panel (decorative member) 210a composing the front part of dashboard 210. Second mirror 123 in second optical system 129 may be formed from a part of antireflection cover 213 mounted inside dashboard 210 to cover first optical system 119.

A screen generating an image using a liquid crystal display device, an organic light-emitting diode (electroluminescence), a plasma display, or a projector can be used for first display element 111.

### [3-2. Operation]

As illustrated in FIG. 6, virtual image I1 is generated by first optical system 119 in the third example. Specifically, an image displayed by first display element 111 is reflected on optical device 131, reflected on first mirror 112, then reflected on second mirror 113, and then reflected on windshield 220, thereby being guided to point-of-view region 400 of observer D and visually recognized by observer D as virtual image I1.

Virtual image I2 is generated by second optical system 129. Specifically, an image displayed by first display element 111 passes through on optical device 131, is reflected on first mirror 122, then reflected on second mirror 123, and then reflected on windshield 220, thereby being guided to point-of-view region 400 of observer D and visually recognized by observer D as virtual image I2.

In the present example, optical device 131 can switch between reflection and transmittance. Specifically, optical device 131 can switch between reflection and transmittance every certain period of time, thereby being capable of alternately guiding the light flux emitted from first display element 111 to first optical system 119 and second optical system 129. The reflection and transmittance of optical device 131 is switched in association with a light flux of an image for virtual image I1 and a light flux of an image for virtual image I2. With this, virtual image I1 displayed in first region 221 and virtual image I2 displayed in second region 222 can be shown as if they are simultaneously displayed. In this case, reflection and transmittance is switched by optical device 131 with a speed equal to or higher than 48 frames per second, and this provides less flickering to observer D. As a result, observer D can visually recognize virtual image I1 and virtual image 12 as if they are always simultaneously displayed. In addition, brightness of a virtual image to be displayed can be adjusted by changing a ratio of a time for reflecting a light flux emitted from first display element 111 and a time for transmitting the light flux with optical device 131.

It is possible that only one virtual image is displayed without displaying the other virtual image. In this case, optical device 131 can use a dimming film that switches between transmittance and reflection according to a liquid crystal shutter or a voltage application, for example.

In addition, two virtual images can simultaneously be displayed by using a device, which has different property between transmittance and reflection according to a wavelength band, for optical device 131. The device having such property is a dichroic mirror, for example.

Optical device 131 may be an optical element in which transmittance property and reflection property are changed according to a polarizing direction. For example, such optical element can transmit one polarized light out of the light flux emitted from first display element 111 and guide this light to second optical system 129, while it can reflect the other polarized light and guide this light to first optical system 119 for display. The optical element having this property is a polarizing beam splitter, for example.

### [3-3. Effect]

The display device includes first display element 111, optical device 131 that splits a light flux, first optical system 119, and second optical system 129, whereby the size of head-up display 100 in the depth direction (in the vertical direction in FIG. 6) and the size in the front-back direction (in the horizontal direction in FIG. 6) of car 200 can be decreased. With this, head-up display 100 can be downsized, and a display of a virtual image on a large screen is enabled with two virtual images I1 and I2. In addition, head-up display 100 enables setting of a display position or display size for each of virtual images to be displayed.

In addition, as in the first example, head-up display 100 according to the third example uses a part of front panel 212 and a part of antireflection cover 213 respectively as first mirror 122 and second mirror 123 in second optical system 129. Thus, further downsizing of entire head-up display 100 can be implemented. Furthermore, first display element 111 is shared by first optical system 119 and second optical system 129, whereby low-cost head-up display 100 can be provided.

In addition, as in the first example, head-up display 100 according to the third example uses a part of front panel 212 and a part of antireflection cover 213 respectively as first mirror 122 and second mirror 123 in second optical system 129. Thus, further downsizing of entire head-up display 100 can be implemented.

### FOURTH EXEMPLARY EMBODIMENT

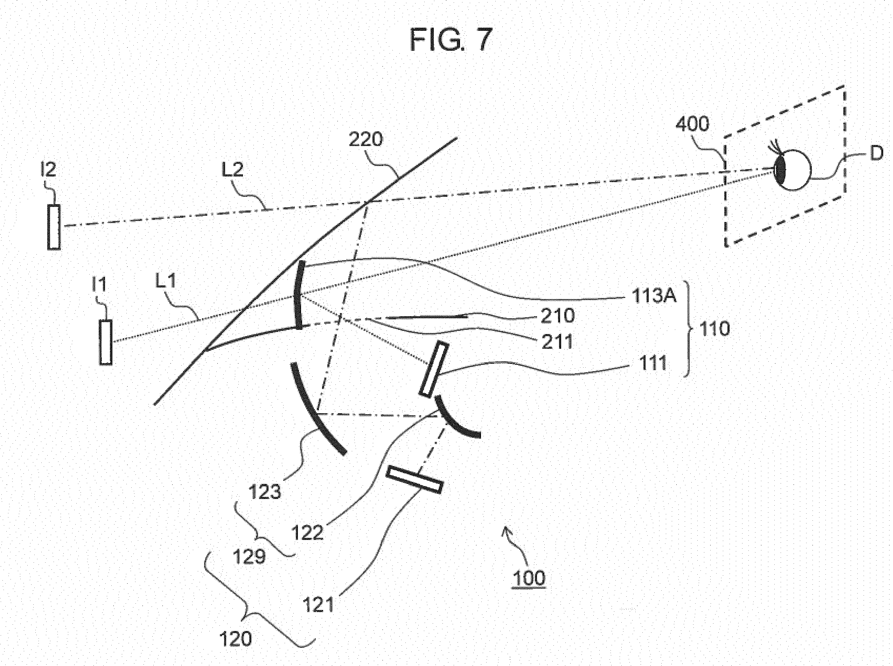

A fourth exemplary embodiment will be described below with reference to FIG. 7.

### [4-1. Configuration]

FIG. 7 is a diagram schematically illustrating head-up display 100 mounted to car 200 according to the fourth exemplary embodiment. Head-up display 100 includes first display device 110 and second display device 120. First display device 110 includes first display element 111 and combiner 113A. The reflection surface of combiner 113A is desirably concave. First display element 111 is disposed at the back of car 200 relative to opening 211, and mounted with a display surface facing combiner 113A.

Second display device 120 includes second display element 121 and second optical system 129. Second optical system 129 includes first mirror 122 and second mirror 123 having larger reflection surface than first mirror 122. First mirror 122 is disposed at the back of car 200 relative to opening 211. On the other hand, second mirror is disposed at the front of car 200 relative to opening 211. Desirably, a reflection surface of first mirror 122 in second optical system 129 is convex, and a reflection surface of second mirror 123 is concave. This can increase the size of virtual image 12, while suppressing aberration.

Combiner 113A in first display device 110 is a semi-transparent mirror reflecting a part of an incident light flux. Since combiner 113A is a semi-transparent mirror, virtual image I1 can be displayed as being superimposed on a scene ahead of observer D without blocking the scene.

First mirror 122 and second mirror 123 in second display device 120 may be semi-transparent mirrors that reflect a part of incident light flux, or mirrors that reflect entire light flux.

First display element 111 is disposed such that a normal vector on its display surface includes a component in the forward direction of car 200. Second display element 121 is disposed such that a normal vector on its display surface includes a component in the backward direction of car 200. A screen generating an image using a liquid crystal display device with a backlight, an organic light-emitting diode (electroluminescence), a plasma display, or a projector can be used for first display element 111 and second display element 121.

As illustrated in FIG. 7, first display device 110 is disposed above second display device 120 in the vertical direction. In other words, first display element 111 is disposed inside dashboard 210 at the side close to opening 211 than second display device 120. Combiner 113A is disposed on dashboard 210.

Second optical system 129 is disposed above second display element 121 and below first display element 111. With this arrangement, each of first display device 110 and second display device 120 can be assembled into a module.

### [4-2. Operation]

First display device 110 displays virtual image I1 in the fourth exemplary embodiment. The image displayed by first display element 111 is reflected through combiner 113A, and guided to point-of-view region 400 of observer D to be visually recognized as virtual image I1 by observer D. Second display device 120 displays virtual image 12. The image displayed by second display element 121 is reflected on first mirror 122, second mirror 123, and windshield 220, and guided to point-of-view region 400 of observer D to be visually recognized as virtual image 12 by observer D.

Description will be given below of the positional relation between first display device 110 and second display device 120, and optical paths of center optical path L1 of the display image of first display device 110 and center optical path L2 of the display image of second display device 120.

Center optical path L1 of an image emitted from first display element 111 passes through opening 211 of dashboard to be incident on combiner 113A. Center optical path L1 incident on combiner 113A and reflected thereon is guided to observer D and visually recognized as virtual image I1 by observer D.

Center optical path L2 emitted from second display element 121 is incident on first mirror 122 of second display device 120. Center optical path L2 is reflected on first mirror 122, and incident on second mirror 123 of second display device 120. Then, center optical path L2 reflected on second mirror 123 passes through opening 211 and is incident on windshield 220. Center optical path L2 incident on windshield 220 is reflected and guided to point-of-view region 400 to allow observer D to visually recognize virtual image 12.

A vector of center optical path L1 which is emitted from first display element 111 and then incident on combiner 113A has a component in the forward direction of car 200. On the other hand, a vector of center optical path L2 which is emitted from second display element 121 and then incident on windshield 220 has a component in the backward direction of car 200.

### [4-3. Effect]

The display device in head-up display 100 is separated into first display device 110 and second display device 120, whereby the size in the depth direction and in the width direction of head-up display 100 can be decreased. The present exemplary embodiment can also provide head-up display 100 that can display a large-screen virtual image with a small space.

In head-up display 100 according to the fourth exemplary embodiment, first display element 111, which is a component on center optical path L1 and located just before combiner 113A, is disposed posterior to opening 211, and second mirror 123, which is a component on center optical path L2 and located just before windshield 220, is disposed anterior to opening 211. With the configuration in which first display element 111 that is a main component of first display device 110 and second mirror 123 that is a main component of second display device 120 are respectively disposed at the back and at the front of car 200 relative to opening 211 as described above, the space in housing 140 can effectively be used, whereby head-up display 100 can be downsized.

In addition, in head-up display 100, center optical paths L1 and L2 cross each other at the position near opening 211. Thus, opening 211 can be decreased, whereby entrance of external light into dashboard 210 can be prevented.

Since first display device 110 and second display device 120 are separately provided, a display distance or display size of a virtual image can be set for each display region.

In addition, assembling property can be enhanced by forming each of first display device 110 and second display device 120 into a module.

### FIFTH EXEMPLARY EMBODIMENT

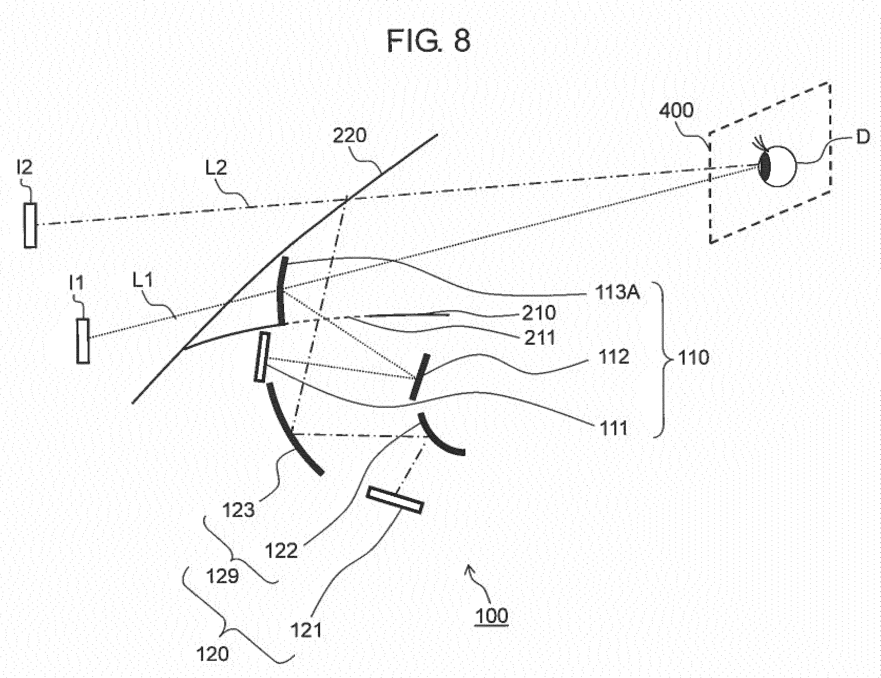

Head-up display 100 according to a fifth exemplary embodiment will be described below with reference to FIG. 8.

### [5-1. Configuration]

FIG. 8 is a schematic diagram illustrating the configuration of head-up display 100 mounted to car 200 according to the fifth exemplary embodiment. Head-up display 100 includes first display device 110 and second display device 120. First display device 110 includes first display element 111 and first optical system 119. First optical system 119 includes first mirror 112 and combiner 113A. The reflection surface of combiner 113A is concave. First display element 111 is disposed at the front of car 200 and first mirror 112 is disposed at the back of car 200 relative to opening 211.

Second display device 120 includes second display element 121 and second optical system 129. Second optical system 129 includes first mirror 122 and second mirror 123 having larger reflection surface than first mirror 122. A reflection surface of first mirror 122 in second optical system 129 is convex, and a reflection surface of second mirror 123 is concave. First mirror 122 is disposed at the back of car 200 relative to opening 211. On the other hand, second mirror 123 is disposed at the front of car 200 relative to opening 211.

Combiner 113A in first display device 110 is a semi-transparent mirror reflecting a part of an incident light flux. Since combiner 113A is a semi-transparent mirror, virtual image I1 can be displayed as being superimposed on a scene ahead of observer D without blocking the scene.

First mirror 122 and second mirror 123 in second display device 120 may be semi-transparent mirrors that reflect a part of incident light flux, or mirrors that reflect entire light flux.

First display element 111 is disposed such that a normal vector on its display surface includes a component in the backward direction and vertically downward direction of car 200. Second display element 121 is disposed with its display surface facing the back of car 200. A screen generating an image using a liquid crystal display device, an organic light-emitting diode (electroluminescence), a plasma display, or a projector can be used for first display element 111 and second display element 121.

First display device 110 is disposed above second display device 120 in the vertical direction. Like second display element 121, first display element 111 and first mirror 112 in first optical system 119 are disposed inside dashboard 210. Combiner 113A is disposed on dashboard 210. Second optical system 129 in second display device 120 is disposed below first display element 111, and second display element 121 is disposed below second optical system 129. With this arrangement in which first display device 110 and second display device 120 are disposed for each region, each of first display device 110 and second display device 120 can be assembled into a module.

### [5-2. Operation]

As illustrated in FIG. 8, first display device 110 displays virtual image I1 in the fifth exemplary embodiment. The image displayed by first display element 111 is reflected through first mirror 112, reflected through combiner 113A, and guided to point-of-view region 400 to be visually recognized as virtual image I1 by observer D.

Second display device 120 displays virtual image 12. The image displayed by second display element 121 is reflected through first mirror 122, reflected through second mirror 123, then reflected through windshield 220, and guided to point-of-view region 400 to be visually recognized as virtual image 12 by observer D.

Description will be given below of the positional relation between first display device 110 and second display device 120, and optical paths of center optical path L1 of first display device 110 and center optical path L2 of second display device 120.

Center optical path L1 of an image emitted from first display element 111 is reflected on first mirror 112, and passes through opening 211 of dashboard to be incident on combiner 113A. Center optical path L1 is reflected on combiner 113A and guided to observer D to allow observer D to visually recognize virtual image I1. Center optical path L2 emitted from second display element 121 is incident on first mirror 122 of second display device 120. Center optical path L2 is reflected on first mirror 122, and incident on second mirror 123 of second display device 120. Then, center optical path L2 passes between first display element 111 and first mirror 112 in first display device 110, passes between first mirror 112 of first display device 110 and combiner 113A, is incident on windshield 220, reflected on windshield 220, and then, guided to point-of-view region 400 to allow observer D to visually recognize virtual image 12.

A vector of center optical path L1 which is emitted from first display element 111 and then incident on combiner 113A has a component in the forward direction of car 200. On the other hand, a vector of center optical path L2 which is emitted from second display element 121 and then incident on windshield 220 has a component in the backward direction of car 200.

### [5-3. Effect]

The display device is separated into first display device 110 and second display device 120, whereby the size in the depth direction and in the width direction of head-up display 100 can be decreased. The present exemplary embodiment can also provide head-up display 100 that can display a large-screen virtual image with a small space.

In head-up display 100 according to the fifth exemplary embodiment, first mirror 112, which is a component on center optical path L1 and located just before combiner 113A, is disposed posterior to opening 211, and second mirror 123, which is a component on center optical path L2 and located just before windshield 220, is disposed anterior to opening 211. With the configuration in which first mirror 112 that is a main component of first display device 110 and second mirror 123 that is a main component of second display device 120 are respectively disposed at the back and at the front of car 200 relative to opening 211 as described above, the space in housing 140 can effectively be used, whereby head-up display 100 can be downsized.

In addition, in head-up display 100, center optical paths L1 and L2 cross each other at the position near opening 211. Thus, opening 211 can be decreased, whereby entrance of external light into dashboard 210 can be prevented.

Since first display device 110 and second display device 120 are separately provided, a display distance or display size of a virtual image can be set for each display region.

In addition, assembling property can be enhanced by forming each of first display device 110 and second display device 120 into a module.

### SIXTH EXEMPLARY EMBODIMENT

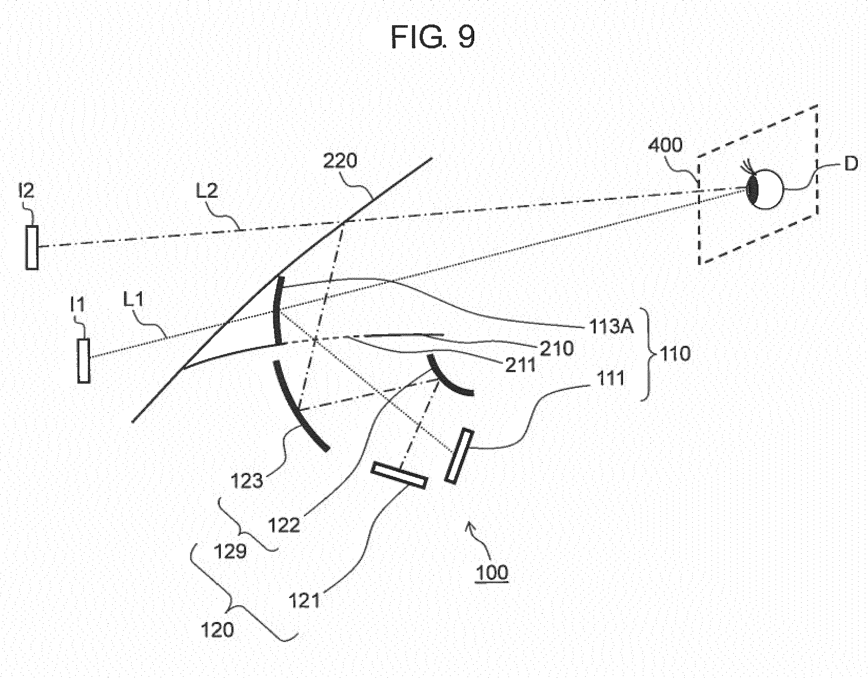

Head-up display 100 according to a sixth exemplary embodiment will be described below with reference to FIG. 9.

### [6-1. Configuration]

FIG. 9 is a schematic diagram illustrating the configuration of head-up display 100 mounted to car 200 according to the sixth exemplary embodiment. Head-up display 100 includes first display device 110 and second display device 120. First display device 110 includes first display element 111 and combiner 113A. The reflection surface of combiner 113A is desirably concave. First display element 111 is disposed at the back of car 200 relative to opening 211. Second display device 120 includes second display element 121 and second optical system 129. Second optical system 129 includes first mirror 122 and second mirror 123 having larger reflection surface than first mirror 122. Desirably, a reflection surface of first mirror 122 in second optical system 129 is convex, and a reflection surface of second mirror 123 is concave. First mirror 122 is disposed at the back of car 200 relative to opening 211. On the other hand, second mirror 123 is disposed at the front of car 200 relative to opening 211.

Combiner 113A in first display device 110 is desirably a semi-transparent mirror reflecting a part of an incident light flux. Since combiner 113A is a semi-transparent mirror, virtual image I1 can be displayed as being superimposed on a scene ahead of observer D without blocking the scene. First mirror 122 and second mirror 123 in second display device 120 may be semi-transparent mirrors that reflect a part of incident light flux, or mirrors that reflect entire light flux.

A screen generating an image using a liquid crystal display device, an organic light-emitting diode (electroluminescence), a plasma display, or a projector can be used for first display element 111 and second display element 121.

Like second display element 121, first display element 111 is mounted inside dashboard 210 (one example of a housing), and a normal vector on its display surface has a component in the forward direction of car 200. First display element 111 is provided below first mirror 122 in second display device 120 in the vertical direction and adjacent to second display element 121 at the back of car 200. Combiner 113A is disposed on dashboard 210.

Second display element 121 is disposed vertically below second optical system 129, and a normal vector on its display surface includes a component in the backward direction of car 200. A light-shielding wall may be provided between first display element 111 and second display element 121 to prevent emission light from entering display surfaces of these elements.

### [6-2. Operation]

As illustrated in FIG. 9, first display device 110 displays virtual image I1 in the sixth exemplary embodiment. The image displayed by first display element 111 is reflected through combiner 113A, and guided to point-of-view region 400 of observer D to be visually recognized as virtual image I1.

As illustrated in FIG. 9, second display device 120 displays virtual image 12 in the sixth exemplary embodiment. The image displayed by second display element 121 is reflected on first mirror 122, second mirror 123, and windshield 220, and guided to point-of-view region 400 of observer D to be visually recognized as virtual image 12.

The positional relation between first display device 110 and second display device 120 and optical paths of center optical paths L1 and L2 will be described below.

Center optical path L1 emitted from first display element 111 sequentially passes between second display element 121 and first mirror 122 in second display device 120, between first mirror 122 and second mirror 123 in second display device 120, and through opening 211, is reflected on combiner 113A, and then, guided to observer D to allow observer D to visually recognize virtual image I1. According to this configuration, an optical path length can be secured, and dashboard 210 can be downsized.

A vector of center optical path L1 which is emitted from first display element 111 and then incident on combiner 113A has a component in the forward direction of car 200. On the other hand, a vector of center optical path L2 which is emitted from second display element 121 and then incident on windshield 220 has a component in the backward direction of car 200.

### [6-3. Effect]

The display device is separated into first display device 110 and second display device 120, whereby the size in the depth direction and in the width direction of head-up display 100 can be decreased. The present exemplary embodiment can also provide head-up display 100 that can display a large-screen virtual image with a small space.

In head-up display 100 according to the sixth exemplary embodiment, first display element 111, which is a component on center optical path L1 and located just before combiner 113A, is disposed posterior to opening 211, and second mirror 123, which is a component on center optical path L2 and located just before windshield 220, is disposed anterior to opening 211. With the configuration in which first display element 111 that is a main component of first display device 110 and second mirror 123 that is a main component of second display device 120 are respectively disposed at the back and at the front of car 200 relative to opening 211 as described above, the space in housing 140 can effectively be used, whereby head-up display 100 can be downsized.

In addition, in head-up display 100, center optical paths L1 and L2 cross each other at the position near opening 211. Thus, opening 211 can be decreased, whereby entrance of external light into dashboard 210 can be prevented.

Since first display device 110 and second display device 120 are separately provided, a display distance or display size of a virtual image can be set for each display region.

In the sixth exemplary embodiment, first display element 111 is disposed below first mirror 122 such that the light beam emitted from first display element 111 and incident on combiner 113A passes between second display element 121 and first mirror 122 in second display device 120. When first display element 111 is disposed as described above, the distance from first display element 111 to combiner 113A can be increased, whereby range of visibility of virtual image I1 viewed from observer D can be increased, and further, the size of head-up display 100 in the depth direction can be decreased.

### SEVENTH EXAMPLE not part of the invention but facilitates understanding of the invention.

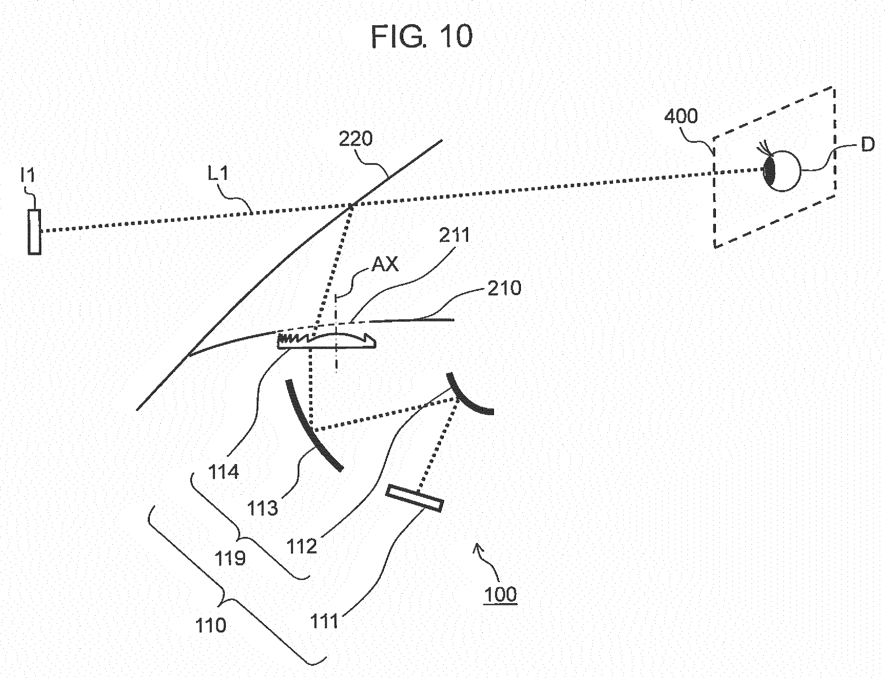

A seventh example will be described below with reference to FIG. 10.

[7-1. Configuration] FIG. 10 is a schematic diagram illustrating a cross-section of head-up display 100 according to the seventh example. Head-up display 100 according to the seventh example is mounted inside dashboard 210 of car 200. Head-up display 100 includes first display device 110. First display device 110 includes first display element 111 and first optical system 119. First optical system 119 includes first mirror 112, second mirror 113, and Fresnel lens 114. First mirror 112 and second mirror 113 form a reflection optical system. Fresnel lens 114 is one example of a refraction optical system composed of a member transmitting incident light. Desirably, a reflection surface of first mirror 112 in first optical system 119 is convex, and a reflection surface of second mirror 113 is concave. Fresnel lens 114 has a positive power, and has a Fresnel surface formed at an emission side. The position where center optical path L1 of an image emitted from the display region of first display element 111 is incident on Fresnel lens 114 is located at the side of windshield 220 of car 200, which is a vehicle, relative to center axis AX serving as a rotation center. Fresnel lens 114 has the Fresnel surface on the surface where center optical path L1 of the image displayed by first display element 111 is emitted.

With this configuration, center optical path L1 of the image reflected on second mirror 113 can be deflected by Fresnel lens 114 serving as a refraction optical system. A focal point of center optical path L1 of the image can be formed at the position visually recognizable by observer D according to the tilt of windshield 220. With the configuration in which an angle of a cutout groove of Fresnel lens 114 is formed to be nearly parallel to the emission light from Fresnel lens 114, flare of virtual image I1 can be reduced.
With the configuration in which the Fresnel surface of Fresnel lens 114 is formed to be aspherical, monochromatic aberration can be corrected.

A screen generating an image using a liquid crystal display device, an organic light-emitting diode (electroluminescence), a plasma display, or a projector can be used for first display element 111.

As illustrated in FIG. 10, first display device 110 allows observer D to visually recognize virtual image I1 in the seventh example. The image displayed by first display element 111 is reflected sequentially by first mirror 112 and second mirror 113, magnified by Fresnel lens 114, passes through opening 211 of dashboard 210, and then, is reflected on windshield 220 to be guided to point-of-view region 400 of observer D. With this, observer D can visually recognize virtual image I1.

### [7-2. Effect]

As described above, Fresnel lens 114 is used in first display device 110, whereby the size in the depth direction of head-up display 100 can be decreased.

In the present example, the rotation center of Fresnel lens 114 is decentered toward the backward direction of car 200 from the position where a center light beam emitted from the center of first display element 111 is incident on Fresnel lens 114, by which the light reflected by second mirror 113 is refracted toward the back of car 200. According to this configuration, the position of second mirror 113 can be shifted toward the front of the vehicle, compared to the case where Fresnel lens 114 is not used.
Generally, vehicle structures such as meter panels are mounted in dashboard 210 of car 200. With the configuration in which the position of second mirror 113 is shifted toward the front of the vehicle, the interference between second mirror 113 and vehicle structures in dashboard 210 can be reduced. Accordingly, mounting property of head-up display 100 to a vehicle can be enhanced.

In addition, first display device 110 according to the present example can be formed into a module, whereby assembling property can be enhanced.

### OTHER EXEMPLARY EMBODIMENTS

As presented above, the first to third and seventh examples and fourth to sixth exemplary embodiments have been described as an example of the technology described in the present application. However, the technology in the present disclosure is not limited to these, and can be applied to embodiments in which various changes, replacements, additions, omissions, or the like are made.

Other exemplary embodiments will be described below.

In the first to third and seventh examples and fourth to sixth exemplary embodiments, the number of mirrors in an optical system is not limited to two, but can be changed according to a display distance of a virtual image or a size of a display element. When the head-up display according to the present disclosure is mounted inside a vehicle, the number of times of folding a light flux of a display image can be changed according to a size of a space where the head-up display is mountable, and the number of mirrors can be changed, as necessary, according to this change.

In the first to third examples and fourth to sixth exemplary embodiments, a part of a second mirror in a second optical system can be formed into a semi-transparent mirror, and the semi-transparent part may be located on a path of a part of a light flux from a first optical system. With this configuration, different display regions can continuously be joined.

The first to third examples and fourth to sixth exemplary embodiments describe that first region 221 where virtual image I1 is displayed and second region 222 where virtual image I2 is displayed are not overlapped with each other. However, depending on a display content, a mirror in a first optical system and a mirror in a second optical system may be disposed such that a part of first region 221 and a part of second region 222 are overlapped with each other.

The seventh example describes that head-up display 100 includes one display device which is first display device 110. However, the head-up display can be configured to include two display devices as in the first to sixth exemplary embodiments.

In the seventh example, Fresnel lens 114 is used for a part of an optical system. However, second mirror 113 can be downsized even by using a convex lens other than Fresnel lens 114. In addition, Fresnel lens 114 may be disposed in place of a cover for opening 211.

The seventh example describes a refraction optical system using Fresnel lens 114 which has a flat incidence surface and an emission surface formed into a Fresnel surface. However, a refraction optical system having a convex incidence surface may be used. Alternatively, a Fresnel lens which has an incidence surface formed into a Fresnel surface may be used as a refraction optical system.

The seventh example describes the case in which the center axis of the refraction optical system is decentered toward the back of the vehicle from the incidence position where the center light beam is incident on the refraction optical system. However, the center axis of the refraction optical system may be decentered toward the front of the vehicle from the incidence position where the center light beam of the image is incident on the refraction optical system. In this case, the refraction optical system refracts the light reflected on the reflection optical system toward the front of the vehicle. Therefore, the position of the second mirror can be shifted toward the back of the vehicle, compared to the case where the center axis of the refraction optical system is not decentered. With the configuration in which the center axis of the refraction optical system is decentered toward the back or front of the vehicle as described above, the position of the second mirror in the front-back direction of the vehicle relative to the dashboard can be changed as necessary. Accordingly, the degree of freedom of mounting the second mirror can be enhanced.

The first to third and seventh examples and fourth to sixth exemplary embodiments describe the case where head-up display 100 is mounted inside car 200. However, head-up display 100 may be mounted in a vehicle other than a vehicle, such as an aircraft or an electric train.

As presented above, the exemplary embodiments have been described as an example of the technology according to the present disclosure. For this purpose, the accompanying drawings and the detailed description are provided.

Therefore, components in the accompanying drawings and the detail description may include not only components essential for solving problems, but also components that are provided to illustrate the above described technology and are not essential for solving problems. Therefore, such inessential components should not be readily construed as being essential based on the fact that such inessential components are shown in the accompanying drawings or mentioned in the detailed description.

Further, the above described embodiments have been described to exemplify the technology according to the present disclosure.

### INDUSTRIAL APPLICABILITY

The present disclosure is applicable to a head-up display mounted to a vehicle having a windshield.

### REFERENCE MARKS IN THE DRAWINGS

- 100: head-up display
- 110: first display device
- 111: first display element
- 112: first mirror
- 113: second mirror
- 113A: combiner
- 114: Fresnel lens
- 119: first optical system
- 120: second display device
- 121: second display element
- 122: first mirror
- 123: second mirror
- 129: second optical system
- 131: optical device
- 140: housing
- 200: car (one example of vehicle)
- 210: dashboard
- 210a: front panel
- 211: opening
- 213: antireflection cover
- 220: windshield
- 221: first region
- 222: second region

## Claims

1. A head-up display that is adapted to be disposed inside a dashboard (210) of a vehicle (200) having a windshield (220) ; and that allows an observer (D) to visually recognize a virtual image (11, 12), the head-up display comprising:
a first display element (111) configured to display an image;
a combiner (113A) having translucency and configured to reflect the image displayed by the first display element (111) and project the image onto the observer (D);
a second display element (121) configured to display an image;
a second optical system (129) configured to reflect the image displayed by the second display element (121) and project the image onto the windshield (220); and
a housing (140) having an opening (211) and configured to store the first display element (111), the second display element (121), and the second optical system (129),
wherein the second optical system (129) includes a first mirror (122) and a second mirror (123) in that order on an optical path from the second display element (129) to the windshield (220),
the first display element (111) is disposed at a back of the vehicle (200) relative to the opening (211),
the second mirror (123) is disposed at a front of the vehicle (200) relative to the opening (211), and
**characterized in that**
the first display element (111) and the combiner (113A) are disposed above the second display element (121) and the second optical system (129) in a vertical direction such that the first display element (111) is disposed closer to the opening than the second display element (121) and the second optical system (129),
wherein a center optical path of a light beam incident on the combiner (113A) and a center optical path of a light beam incident on the windshield (220) cross each other near the opening (211) such that the opening can be decreased and entrance of external light into the dashboard (210) can be prevented.

2. The head-up display according to claim 1, wherein
a vector of a light beam (L1), which is emitted from the first display element (111) and to be incident on the combiner (113A), has a component in a forward direction of the vehicle (200), and
a vector of a light beam (L2) which is incident on the windshield (220) from the second optical system (129) has a component in a backward direction of the vehicle (200).

3. The head-up display according to claim 1, wherein a position where the image from the first display element (111) is displayed as the virtual image (11) is vertically below a position where the image from the second display element (121) is displayed as the virtual image (12).

4. The head-up display according to claim 1, wherein a distance from the observer (D) to a position where the image from the first display element (111) is displayed as the virtual image (11) is different from a distance from the observer (D) to a position where the image from the second display element (121) is displayed as the virtual image (12).

5. The head-up display according to claim 1, wherein a reflection surface of the first mirror (122) is convex and a reflection surface of the second mirror (123) is concave.

6. The head-up display according to claim 1, wherein the second optical system (129) is disposed above the second display element (121) and below the first display element (111).

7. The head-up display according to claim 1, wherein a center optical path (L1) of the image from the first display element (111) is configured to pass through the opening (211) to be incident on the combiner (113A).

8. The head-up display according to claim 1 or 7, wherein a center optical path (L2) of the image from the second display element (121) is configured to be incident on and reflected by the first mirror (122), and incident on the second mirror (123), and then pass through the opening (211) to be incident on the windshield (220).

9. A head-up display that is adapted to be disposed inside a dashboard (210) of a vehicle (200) having a windshield (220) ; and that allows an observer (D) to visually recognize a virtual image (11, 12), the head-up display comprising:
a first display element (111) configured to display an image;
a combiner (113A) having translucency and configured to reflect the image displayed by the first display element (111) and project the image onto the observer (D);
a first optical system (119) configured to reflect the image displayed by the first display element (111) and project the image onto the combiner (113A);
a second display element (121) configured to display an image;
a second optical system (129) configured to reflect the image displayed by the second display element (121) and project the image onto the windshield (220); and
a housing (140) having an opening (211) and configured to store the first display element (111), the second display element (121), and the second optical system (129),
wherein the second optical system (129) includes a first mirror (122) and a second mirror (123) in that order on an optical path from the second display element (129) to the windshield (220),
the first optical system (119) is disposed at a back of the vehicle (200) relative to the opening (211),
the second mirror (123) of the second optical system (129) is disposed at a front of the vehicle (200) relative to the opening (211), and
**characterized in that**
the first display element (111), the combiner (113A) and the first optical system (119) are disposed above the second display element (121) and the second optical system (129) in a vertical direction such that the first display element (111) is disposed closer to the opening than the second display element (121) and the second optical system (129),
wherein a center optical path (L1) of a light beam incident on the combiner (113A) and a center optical path (L2) of a light beam incident on the windshield (220) cross each other near the opening (211) such that the opening can be decreased and entrance of external light into the dashboard (210) can be prevented.

10. The head-up display according to claim 9, wherein the first display element (111) is disposed at the front of the vehicle (200) relative to the opening (211).

11. The head-up display according to claim 9, wherein the first mirror (122) of the second optical system (129) is disposed at the back of the vehicle (200) relative to the opening (211).

12. The head-up display according to claim 9 or 11, wherein the second optical system (129) is disposed below the first display element (111) and the second display element (121) is disposed below the second optical system (129).

13. The head-up display according to claim 9, wherein a center optical path (L1) of the image from the first display element (111) is configured to be reflected on a first mirror (112) of the first optical system (119) and to pass through the opening (211) to be incident on the combiner (113A).

14. The head-up display according to claim 9 or 13, wherein a center optical path (L2) of the image from the second display element (121) is configured to be incident on and reflected by the first mirror (122) of the second optical system (129), and incident on the second mirror (123), and then pass between the first display element (111) and a first mirror (112) of the first optical system (119), pass between the first mirror (112) of the first optical system (119) and the combiner (113A) and to be incident on the windshield (220).

15. A vehicle comprising:
a windshield (220); and
a head-up display (100) according to claim 1 or 9.

## Patentansprüche

1. Headup-Display, das zum Anordnen innerhalb eines Armaturenbretts (200) eines Fahrzeugs (200) mit einer Windschutzscheibe (220) eingerichtet ist; und
das es einem Betrachter (D) ermöglicht, ein virtuelles Bild (I1, I2) visuell wahrzunehmen, wobei das Headup-Display umfasst:
ein erstes Anzeigeelement (111), das zum Anzeigen eines Bildes ausgeführt ist;
einen Combiner (113A), der Lichtdurchlässigkeit aufweist und so ausgeführt ist, dass er das von dem ersten Anzeigeelement (111) angezeigte Bild reflektiert und das Bild in Richtung des Betrachters (D) projiziert;
ein zweites Anzeigeelement (121), das zum Anzeigen eines Bildes ausgeführt ist;
ein zweites optisches System (129), das so ausgeführt ist, dass es das von dem zweiten Anzeigeelement (121) angezeigte Bild reflektiert und das Bild auf die Windschutzscheibe (220) projiziert; sowie
ein Gehäuse (140), das eine Öffnung (211) aufweist und so ausgeführt ist, dass es das erste Anzeigeelement (111), das zweite Anzeigeelement (121) und das zweite optische System (129) aufnimmt,
wobei das zweite optische System (129) einen ersten Spiegel (122) sowie einen zweiten Spiegel (123) in dieser Reihenfolge auf einem optischen Weg von dem zweiten Anzeigeelement (129) zu der Windschutzscheibe (220) enthält,
das erste Anzeigeelement (111) an einer hinten liegenden Seite des Fahrzeugs (200) relativ zu der Öffnung (211) angeordnet ist,
der zweite Spiegel (123) an einer vorn liegenden Seite des Fahrzeugs (200) relativ zu der Öffnung (211) angeordnet ist, und
**dadurch gekennzeichnet, dass**
das erste Anzeigeelement (111) und der Combiner (113A) in einer vertikalen Richtung oberhalb des zweiten Anzeigeelementes (121) und des zweiten optischen Systems (129) so angeordnet sind, dass das erste Anzeigeelement (111) näher an der Öffnung angeordnet ist als das zweite Anzeigeelement (121) und das zweite optische System (129),
wobei ein mittiger optischer Weg eines auf den Combiner (113A) auftreffenden Lichtstrahls und ein mittiger optischer Weg eines auf die Windschutzscheibe (220) auftreffenden Lichtstrahls einander in der Nähe der Öffnung (211) so kreuzen, dass die Öffnung verkleinert werden kann und Eintritt von Licht von außen in das Armaturenbrett (210) verhindert werden kann.

2. Headup-Display nach Anspruch 1, wobei
ein Vektor eines Lichtstrahls (L1), der von dem ersten Anzeigeelement (111) emittiert wird und auf den Combiner (113A) auftreffen soll, eine Komponente in einer Vorwärtsrichtung des Fahrzeugs (200) hat, und
ein Vektor eines Lichtstrahls (L2), der von dem zweiten optischen System (129) auf die Windschutzscheibe (220) auftrifft, eine Komponente in einer Rückwärtsrichtung des Fahrzeugs (200) hat.

3. Headup-Display nach Anspruch 1, wobei eine Position, an der das Bild von dem ersten Anzeigeelement (111) als das virtuelle Bild (I1) angezeigt wird, vertikal unterhalb einer Position liegt, an der das Bild von dem zweiten Anzeigeelement (121) als das virtuelle Bild (I2) angezeigt wird.

4. Headup-Display nach Anspruch 1, wobei ein Abstand von dem Betrachter (D) zu einer Position, an der das Bild von dem ersten Anzeigeelement (111) als das virtuelle Bild (I1) angezeigt wird, sich von einem Abstand von dem Betrachter (D) zu einer Position unterscheidet, an der das Bild von dem zweiten Anzeigeelement (121) als das virtuelle Bild (I2) angezeigt wird.

5. Headup-Display nach Anspruch 1, wobei eine Reflexionsfläche des ersten Spiegels (122) konvex ist und eine Reflexionsfläche des zweiten Spiegels (123) konkav ist.

6. Headup-Display nach Anspruch 1, wobei das zweite optische System (129) oberhalb des zweiten Anzeigeelementes (121) und unterhalb des ersten Anzeigeelementes (111) angeordnet ist.

7. Headup-Display nach Anspruch 1, wobei ein mittiger optischer Weg (L1) des Bildes von dem ersten Anzeigeelement (111) so ausgeführt ist, dass es durch die Öffnung (211) verläuft und auf den Combiner (113A) auftrifft.

8. Headup-Display nach Anspruch 1 oder 7, wobei ein mittiger optischer Weg (L2) des Bildes von dem zweiten Anzeigeelement (121) so ausgeführt ist, dass es auf den ersten Spiegel (122) auftrifft und von diesem reflektiert wird, und auf den zweiten Spiegel (123) auftrifft, und dann durch die Öffnung (211) hindurchtritt und auf die Windschutzscheibe (220) auftrifft.

9. Headup-Display, das zum Anordnen innerhalb eines Armaturenbretts (200) eines Fahrzeugs (200) mit einer Windschutzscheibe (220) eingerichtet ist; und
das es einem Betrachter (D) ermöglicht, ein virtuelles Bild (I1, I2) visuell wahrzunehmen, wobei das Headup-Display umfasst:
ein erstes Anzeigeelement (111), das zum Anzeigen eines Bildes ausgeführt ist;
einen Combiner (113A), der Lichtdurchlässigkeit aufweist und so ausgeführt ist, dass er das von dem ersten Anzeigeelement (111) angezeigte Bild reflektiert und das Bild in Richtung des Betrachters (D) projiziert;
ein erstes optisches System (119), das so ausgeführt ist, dass es das von dem ersten Anzeigeelement (111) angezeigte Bild reflektiert und das Bild auf den Combiner (220) projiziert; und
ein zweites Anzeigeelement (121), das zum Anzeigen eines Bildes ausgeführt ist;
ein zweites optisches System (129), das so ausgeführt ist, dass es das von dem zweiten Anzeigeelement (121) angezeigte Bild reflektiert und das Bild auf die Windschutzscheibe (220) projiziert; sowie
ein Gehäuse (140), das eine Öffnung (211) aufweist und so ausgeführt ist, dass es das erste Anzeigeelement (111), das zweite Anzeigeelement (121) und das zweite optische System (129) aufnimmt,
wobei das zweite optische System (129) einen ersten Spiegel (122) sowie einen zweiten Spiegel (123) in dieser Reihenfolge auf einem optischen Weg von dem zweiten Anzeigeelement (129) zu der Windschutzscheibe (220) enthält,
das erste optische System (119) an einer hinten liegenden Seite des Fahrzeugs (200) relativ zu der Öffnung (211) angeordnet ist,
der zweite Spiegel (123) des zweiten optischen Systems (129) an einer vorn liegenden Seite des Fahrzeugs (200) relativ zu der Öffnung (211) angeordnet ist, und
**dadurch gekennzeichnet, dass**
das erste Anzeigeelement (111), der Combiner (113A) und das erste optische System (119) in einer vertikalen Richtung oberhalb des zweiten Anzeigeelementes (121) und des zweiten optischen Systems (129) so angeordnet sind, dass das erste Anzeigeelement (111) näher an der Öffnung angeordnet ist als das zweite Anzeigeelement (121) und das zweite optische System (129),
wobei ein mittiger optischer Weg (L1) eines auf den Combiner (113A) auftreffenden Lichtstrahls und ein mittiger optischer Weg (L2) eines auf die Windschutzscheibe (220) auftreffenden Lichtstrahls einander in der Nähe der Öffnung (211) so kreuzen, dass die Öffnung verkleinert werden kann und Eintritt von Licht von außen in das Armaturenbrett (210) verhindert werden kann.

10. Headup-Display nach Anspruch 9, wobei das erste Anzeigeelement (111) an der vorn liegenden Seite des Fahrzeugs (200) relativ zu der Öffnung (211) angeordnet ist.

11. Headup-Display nach Anspruch 9, wobei der erste Spiegel (122) des zweiten optischen Systems (129) an der hinten liegenden Seite des Fahrzeugs (200) relativ zu der Öffnung (211) angeordnet ist.

12. Headup-Display nach Anspruch 9 oder 11, wobei das zweite optische System (129) unterhalb des ersten Anzeigeelementes (111) angeordnet ist und das zweite Anzeigeelement (121) unterhalb des ersten Anzeigeelementes (129) angeordnet ist.

13. Headup-Display nach Anspruch 9, wobei ein mittiger optischer Weg (L1) des Bildes von dem ersten Anzeigeelement (111) so ausgeführt ist, dass es an einem ersten Spiegel (112) des ersten optischen Systems (119) reflektiert wird und durch die Öffnung (211) hindurchtritt und auf den Combiner (113A) auftrifft.

14. Headup-Display nach Anspruch 9 oder 13, wobei ein mittiger optischer Weg (L2) des Bildes von dem zweiten Anzeigeelement (121) so ausgeführt ist, dass es auf den ersten Spiegel (122) des zweiten optischen Systems (129) auftrifft und von diesem reflektiert wird und auf den zweiten Spiegel (123) auftrifft, und dann zwischen dem ersten Anzeigeelement (111) und einem ersten Spiegel (112) des ersten optischen Systems (119) hindurchtritt, zwischen dem ersten Spiegel (112) des ersten optischen Systems (119) und dem Combiner (113A) hindurchtritt und auf die Windschutzscheibe (220) auftrifft.

15. Fahrzeug, das umfasst:
eine Windschutzscheibe (220); sowie
ein Headup-Display (100) nach Anspruch 1 oder 9.

## Revendications

1. Dispositif d'affichage tête haute qui est conçu pour être placé à l'intérieur du tableau de bord (210) d'un véhicule (200) comportant un pare-brise (200), et qui permet à un observateur (D) de reconnaître visuellement une image virtuelle (I1, I2),
le dispositif d'affichage tête haute comprenant :
un premier élément d'affichage (111) configuré pour afficher une image,
un mélangeur (113A) présentant une certaine transparence et configuré pour réfléchir l'image affichée par le premier élément d'affichage (111) et pour projeter l'image sur l'observateur (D),
un second élément d'affichage (121) configuré pour afficher une image,
un second système optique (129) configuré pour réfléchir l'image affichée par le second élément d'affichage (121) et pour projeter l'image sur le pare-brise (220), et
une enveloppe (140) comportant une ouverture (211) et configurée pour accueillir le premier élément d'affichage (111), le second élément d'affichage (121) et le second système optique (129),
dans lequel le second système optique (129) inclut un premier miroir (122) et un second miroir (123) dans cet ordre sur le trajet optique allant du second système optique (129) au pare-brise (220),
le premier élément d'affichage (111) est disposé à l'arrière du véhicule (200) par rapport à l'ouverture (211),
le second miroir (123) est disposé à l'avant du véhicule (200) par rapport à l'ouverture (211), et
**caractérisé en ce que**
le premier élément d'affichage (111) et le mélangeur (113A) sont disposés au-dessus du second élément d'affichage (121) et du second système optique (129) dans la direction verticale de sorte à ce que le premier élément d'affichage (111) soit disposé pour être plus proche de l'ouverture que le second élément d'affichage (121) et le second système optique (129),
dans lequel le trajet optique central d'un faisceau de lumière incident sur le mélangeur (113A) et le trajet optique central d'un faisceau de lumière incident sur le pare-brise (220) se croisent à proximité de l'ouverture (211) de sorte à ce que l'ouverture puisse être diminuée et que l'entrée d'une lumière externe dans le tableau de bord (210) puisse être empêchée.

2. Dispositif d'affichage tête haute selon la revendication 1, dans lequel :
le vecteur d'un faisceau de lumière (L1) qui est émis à partir du premier élément d'affichage (111) pour être incident sur le mélangeur (113A) présente une composante dans la direction vers l'avant du véhicule (200), et
le vecteur d'un faisceau de lumière (L2) qui est incident sur le pare-brise (220) à partir du second système optique (129) présente une composante dans la direction vers l'arrière du véhicule (200).

3. Dispositif d'affichage tête haute selon la revendication 1, dans lequel la position où l'image émise par le premier élément d'affichage (111) est affichée en tant qu'image virtuelle (I1) se trouve verticalement en dessous de la position où l'image émise par le second élément d'affichage (121) est affichée en tant qu'image virtuelle (I2) .

4. Dispositif d'affichage tête haute selon la revendication 1, dans lequel la distance par rapport à l'observateur (D) jusqu'à la position où l'image émise par le premier élément d'affichage (111) est affichée en tant qu'image virtuelle (I1) est différente de la distance par rapport à l'observateur (D) jusqu'à une position où l'image émise par le second élément d'affichage (121) est affichée en tant qu'image virtuelle (I2).

5. Dispositif d'affichage tête haute selon la revendication 1, dans lequel la surface de réflexion du premier miroir (122) est convexe, et la surface de réflexion du second miroir (123) est concave.

6. Dispositif d'affichage tête haute selon la revendication 1, dans lequel le second système optique (129) est disposé au-dessus du second élément d'affichage (121) et en dessous du premier élément d'affichage (111).

7. Dispositif d'affichage tête haute selon la revendication 1, dans lequel le trajet optique central (L1) de l'image émise par le premier élément d'affichage (111) est configuré pour traverser l'ouverture (211) pour devenir incident sur le mélangeur (113A).

8. Dispositif d'affichage tête haute selon la revendication 1 ou la revendication 7, dans lequel le trajet optique central (L2) de l'image émise par le second élément d'affichage (121) est configuré pour être incident sur le premier miroir (122) et réfléchi par celui-ci, et incident sur le second miroir (123), puis pour traverser l'ouverture (211) pour devenir incident sur le pare-brise (220).

9. Dispositif d'affichage tête haute qui est conçu pour être placé à l'intérieur du tableau de bord (210) d'un véhicule (200) comportant un pare-brise (200), et qui permet à un observateur (D) de reconnaître visuellement une image virtuelle (I1, I2),
le dispositif d'affichage tête haute comprenant :
un premier élément d'affichage (111) configuré pour afficher une image,
un mélangeur (113A) présentant une certaine transparence et configuré pour réfléchir l'image affichée par le premier élément d'affichage (111) et pour projeter l'image sur l'observateur (D),
un premier système optique (119) configuré pour réfléchir l'image affichée par le premier élément d'affichage (111) et pour projeter l'image sur le mélangeur (113A),
un second élément d'affichage (121) configuré pour afficher une image,
un second système optique (129) configuré pour réfléchir l'image affichée par le second élément d'affichage (121) et pour projeter l'image sur le pare-brise (220), et
une enveloppe (140) comportant une ouverture (211) et configurée pour accueillir le premier élément d'affichage (111), le second élément d'affichage (121) et le second système optique (129),
dans lequel le second système optique (129) inclut un premier miroir (122) et un second miroir (123) dans cet ordre sur le trajet optique allant du second système optique (129) au pare-brise (220),
le premier système optique (119) est disposé à l'arrière du véhicule (200) par rapport à l'ouverture (211),
le second miroir (123) du second système optique (129) est disposé à l'avant du véhicule (200) par rapport à l'ouverture (211), et
**caractérisé en ce que**
le premier élément d'affichage (111), le mélangeur (113A) et le premier système optique (119) sont disposés au-dessus du second élément d'affichage (121) et du second système optique (129) dans la direction verticale de sorte à ce que le premier élément d'affichage (111) soit disposé pour être plus proche de l'ouverture que le second élément d'affichage (121) et le second système optique (129),
dans lequel le trajet optique central (L1) d'un faisceau de lumière incident sur le mélangeur (113A) et le trajet optique central (L2) d'un faisceau de lumière incident sur le pare-brise (220) se croisent à proximité de l'ouverture (211) de sorte à ce que l'ouverture puisse être diminuée et que l'entrée d'une lumière externe dans le tableau de bord (210) puisse être empêchée.

10. Dispositif d'affichage tête haute selon la revendication 9, dans lequel le premier élément d'affichage (111) est disposé à l'avant du véhicule (200) par rapport à l'ouverture (211).

11. Dispositif d'affichage tête haute selon la revendication 9, dans lequel le premier miroir (122) du second système optique (129) est disposé à l'arrière du véhicule (200) par rapport à l'ouverture (211).

12. Dispositif d'affichage tête haute selon la revendication 9 ou la revendication 11, dans lequel le second système optique (129) est disposé en dessous du premier élément d'affichage (111), et le second élément d'affichage (121) est disposé en dessous du second système optique (129) .

13. Dispositif d'affichage tête haute selon la revendication 9, dans lequel le trajet optique central (L1) de l'image émise par le premier élément d'affichage (111) est configuré pour être réfléchi sur un premier miroir (112) du premier système optique (119) et pour traverser l'ouverture (200) pour devenir incident sur le mélangeur (113A).

14. Dispositif d'affichage tête haute selon la revendication 9 ou la revendication 13, dans lequel le trajet optique central (L2) de l'image émise par le second élément d'affichage (121) est configuré pour être incident sur le premier miroir (122) du second système optique (129) et réfléchi par celui-ci, et incident sur le second miroir (123), puis pour passer entre le premier élément d'affichage (111) et un premier miroir (112) du premier système optique (119), pour passer entre le premier miroir (112) du premier système optique (119) et le mélangeur (113A) et pour être incident sur le pare-brise (220).

15. Véhicule comprenant :
un pare-brise (220), et
un dispositif d'affichage tête haute (100) conforme à la revendication 1 ou à la revendication 9.
